# EUROPEAN PATENT SPECIFICATION

(11) **EP 0 649 105 B1**
(45) Date of publication and mention of the grant of the patent: **02.04.1997**
(21) Application number: 93308298.4
(22) Date of filing: 19.10.1993
(51) Int. Cl.: G06F 17/20, G06F 17/22, G06F 17/27, G06F 17/30

(54) **Word/number and number/word mapping**
Wort/Nummer- und Nummer/Wort-Abbildung
Correspondance mot/nombre et nombre/mot

(43) Date of publication of application: 19.04.1995
(73) Proprietor: XEROX CORPORATION, Rochester New York 14644 (US)
(72) Inventor: Kaplan, Ronald M., Palo Alto, California 94306 (US); Kay, Martin, Menlo Park, California 94025 (US)
(74) Representative: Johnson, Reginald George

(56) References cited:
- US-A- 5 113 340
- US-A- 5 229 936
- THE COMPUTER JOURNAL. vol. 32, no. 3 , June 1989 , CAMBRIDGE, GB pages 228 - 237 J. KATAJAINEN & T. RAITA 'An Approximation Algorithm for Space-optimal Encoding'
- AFIPS CONFERENCE PROCEEDINGS, 1982 NATIONAL COMPUTER CONFERENCE. 7 June 1982 , HOUSTON, TEXAS, US pages 501 - 508 S.N. SRIHARI ET AL. 'Integration of bottom-up and top-down contextual knowledge in text error correction'
- IEEE TRANSACTIONS ON PATTERN ANALYSIS AND MACHINE INTELLIGENCE. vol. PAMI-5, no. 4 , July 1983 , NEW YORK, US pages 384 - 395 J.J. HULL ET AL. 'An Integrated Algorithm for Text Recognition: Comparison with a Cascaded Algorithm'
- SOFTWARE - PRACTICE AND EXPERIENCE vol. 23, no. 1 , January 1993 , UK pages 15 - 30 C.L. LUCCHESI ET AL. 'Applications of Finite Automata Representing Large Vocabularies'
- THEORETICAL COMPUTER SCIENCE vol. 92, no. 1 , January 1992 , NL pages 181 - 189 D. REVUZ 'Minimisation of acyclic deterministic automata in linear time'

## Description

The present invention relates to techniques for mapping words into numbers and numbers into words.

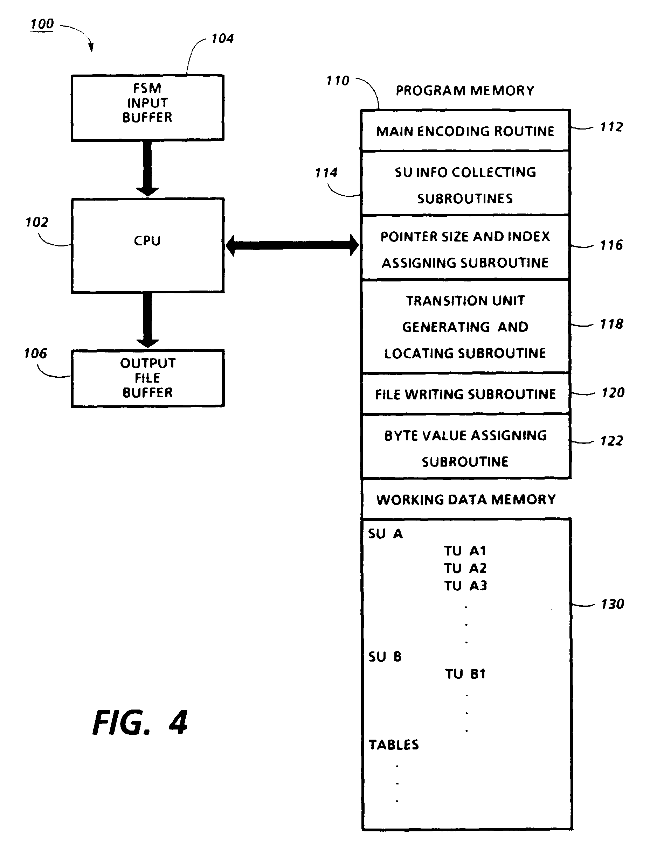

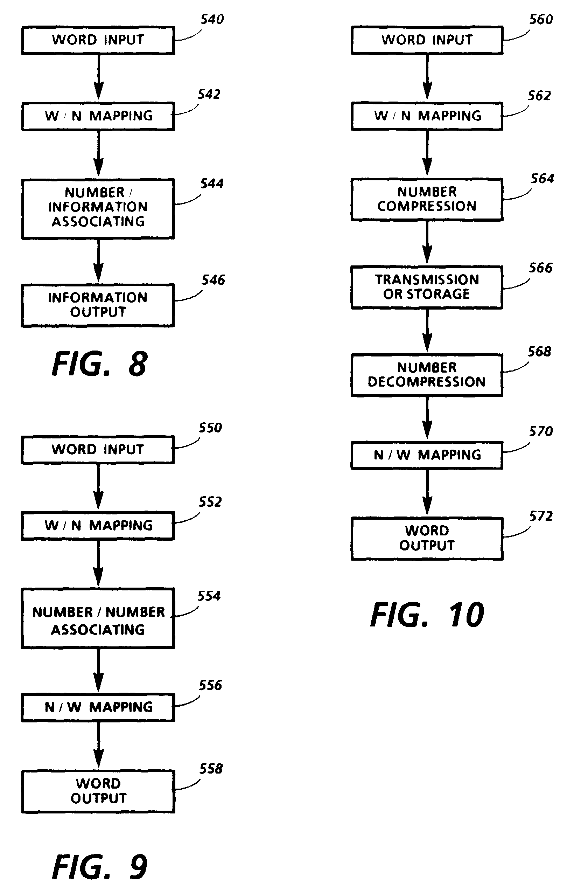

Lucchesi, C.L. and Kowaltowski, T., "Applications of Finite Automata Representing Large Vocabularies," *Software--Practice and Experience*, Vol. 23(1), January 1993, pp. 15-30, describe techniques for compressing a very large vocabulary of words into a minimal acyclic deterministic finite automaton, motivated by the problem of implementing an efficient spelling checker. Fig. 4 shows such an automaton for all forms of certain English verbs. A technique for constructing the automaton is described beginning on page 18; the technique includes a minimization step. The data structure is described at pages 19-20: Each state is represented as an array with *N* entries, where *N* is the size of the alphabet. Most entries correspond to non-existent transitions, and state arrays can therefore be shifted and overlapped in such a way that existing entries do not collide. To each state is attached one *N*-bit vector that selects the existing transitions for the state. Array packing is done by a greedy algorithm, which almost always gives optimal results due to a very large percentage of states with one, two, or three transitions. Also, the number of distinct bit-vectors is much lower than the number of states, so that many are shared. Besides packing the state arrays, short (relative) and long (absolute) state indices are used. For Portugese, letters are stripped of their diacritical marks, the positions of which are encoded after the word terminator. Pages 26-27 describe minimal perfect hashing in relation to Figs. 8-10. The automaton includes, for each state, an integer that gives the number of words that would be accepted by the automaton starting from that state, and two simple functions implement a one-to-one correspondence between the integers 1 to *L*, where *L* is the number of words accepted by the automaton, and the words themselves.

To handle a string of elements such as a word in a digital data processing system, it is frequently desirable to map between words and numbers. While words vary greatly in length, a word's number can ordinarily be expressed digitally as a binary number of a fixed length shorter than the digital codes for that word's characters. Therefore, handling the binary numbers is far more efficient than handling the words themselves. Another reason for mapping a word to a number is to obtain an address or pointer to access information relevant to that word. It is also frequently desirable to map back from a number to a word.

The present invention is concerned with the problem of how to perform word-to-number (W/N) and number-to-word (N/W) mapping efficiently. The invention is based on the discovery of a technique that permits efficient W/N and N/W mapping between a list of words and a dense set of numbers, each of which is a unique number for one of the words. As used herein, the term "mapping" can include W/N or N/W mapping.

According to the invention, W/N or N/W mapping between a list of words and a dense set of numbers can be performed by scanning data that indicate the words in the word list in order, keeping an accurate count of words traversed. In W/N mapping, data indicating an ordered word list can be scanned while searching for a word and keeping a count of suffix endings. In N/W mapping, data indicating an ordered word list can be scanned while keeping a count of suffix endings and keeping a record of the current word.

To perform mapping more efficiently, information is provided that makes it possible to skip parts of data indicating an ordered word list. For example, if the data are structured to include branches, the information can allow skipping of branches. The technique can be implemented by including branching data in data indicating the ordered word list.

The branching data include branch taking information indicating a location of first suffix data indicating a first set of suffix endings. The branching data also include branch skipping information indicating a number of suffix endings in the first set. Therefore, the branch taking information can be used when mapping in relation to a word with one of the first set of suffix endings, to go to the first suffix data. The branch skipping information, on the other hand, can be used when mapping in relation to a word with one of a second set of suffix endings, to skip the first suffix data while keeping an accurate count of suffix endings. For example, during W/N mapping, if the first suffix data is skipped, the number indicated by the branch skipping information can be added to a count of suffix endings; during N/W mapping, on the other hand, the number can be subtracted from the number being mapped.

A product according to the invention includes a storage medium and word list data stored by the storage medium. The word list data indicate a list of words. The word list data include a plurality of suffix ending data items indicating suffix endings of words in the list. A first suffix data item indicates a first set of suffix endings and a second suffix data item indicates a second set of suffix endings. Each suffix data item can include a sequence of bytes, some of which are suffix ending bytes indicating suffix endings.

The word list data also include a branching data item. The branching data item includes branch taking information and branch skipping information as described above. For example, the branch data item can include a pointer positioned at a branch point in the word list data. The pointer can indicate the location of a branch that includes information about a set of suffix endings, and a number of suffix endings in the branch can be annexed to the pointer. Or the branch data item can include a pointer index that can be used to access an entry in a lookup table. The entry includes a pointer to a branch and a number of suffix endings in the branch.

The technique can be extended to reduce storage space by collapsing identical branches into a single branch that can be shared by different sublists of words. At each branch point that can lead to the shared branch, a branching data item includes branch taking information, such as a pointer to the shared branch, and branch skipping information, such as a number of suffix endings in the shared branch. Because of this arrangement of data, pointers introduced to reduce storage space permit skipping of branches and thus also reduce processing time.

It is not necessary to store a count for each set of suffixes as in the technique of Lucchesi et al., described above. Instead, a suffix data item that includes suffix endings can ordinarily be scanned to determine how many suffix endings it contains. If a branch to a suffix data item can be skipped, however, the number of suffix endings can be stored so that it can be retrieved and used to update a running count of suffix endings when the branch is skipped.

In a product in accordance with the invention, the branch taking information and the branch skipping information can be used to perform word-to-number/number-to-word mapping. A product in accordance with the invention may further comprise a processor connected for accessing the word list data.

A method of W/N mapping according to the invention can skip a branch and use the number of suffix endings in the branching data item to update a running count of suffix endings, such as by adding the number of suffix endings to the count. After skipping a branch at the end of one suffix data item and updating the count, W/N mapping according to this technique can scan the sequence of bytes in another suffix data item, incrementing the count of suffix endings for each suffix ending byte. When a byte is reached that indicates the suffix ending of the word being mapped, the count of suffix endings can be provided as the word's number. If the branching data item also includes label information indicating a character that precedes suffix endings in a branch, the W/N mapping method can determine whether to skip the branch by comparing a current character in the word being mapped with the label information.

Similarly, a method of N/W mapping according to the invention can skip a branch to one suffix data item and use the number of suffix endings in the skipped branch to update a count of suffix endings. In this case, the number of suffix endings can be subtracted from the count, which can start at the number being mapped. If each suffix data item includes a sequence of bytes, some of which are label bytes indicating characters, the method can also store a current prefix by storing characters from label bytes in a stack. After skipping the branch and subtracting the number of suffix endings, the method can scan the sequence of bytes in another suffix data item, decrementing the count of suffix endings for each suffix ending byte and updating the current prefix in the stack. When the count of suffix endings reaches zero, the current prefix in the stack can be provided as the number's word. The method can determine whether to skip a branch by comparing the current value of the count with the number of suffix endings in the branch to determine whether the word's suffix ending is in the branch.

The technique outlined above is advantageous because it provides data indicating a word list in a form that permits rapid mapping between words and numbers. In addition to time efficiency, space efficiency can also be improved with shared branches. The word list data can be used in a variety of applications, including a device in which information associated with a word is retrieved based on the number to which that word is mapped. It could also be used to compress and decompress text.

By way of example only, embodiments of the invention will be described with reference to the accompanying drawings, in which:
Fig. 1 is a state-transition diagram of an excerpt from a word list;
Fig. 2 is a schematic drawing of word list data indicating the words in the excerpt of Fig. 1;
Fig. 3 is a flowchart showing a routine which may be used in producing a product that includes word list data;
Fig. 4 is a schematic diagram of a data processing system for producing a product that includes word list data;
Fig. 5 is a flowchart showing a method of mapping a word to a number;
Fig. 6 is a flowchart showing in detail how an alternative transition unit may be found;
Fig. 7 is a flowchart showing a method of mapping a number to a word;
Fig. 8 is a functional block diagram of a technique for associating information with a word using word to number mapping;
Fig. 9 is a functional block diagram of a technique for associating other words with a word using word to number and number to word mapping; and
Fig. 10 is a functional block diagram of a technique for text compression and decompression using word to number and number to word mapping.

### A. General Features

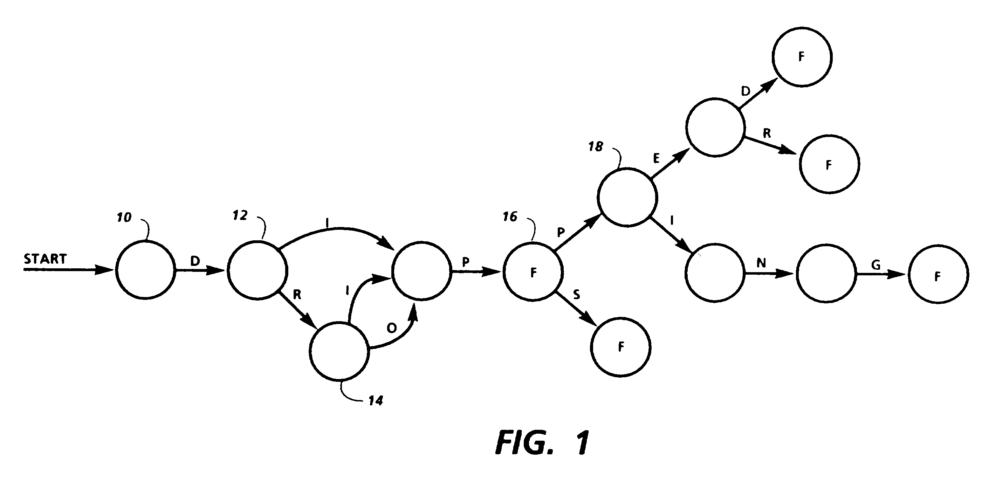

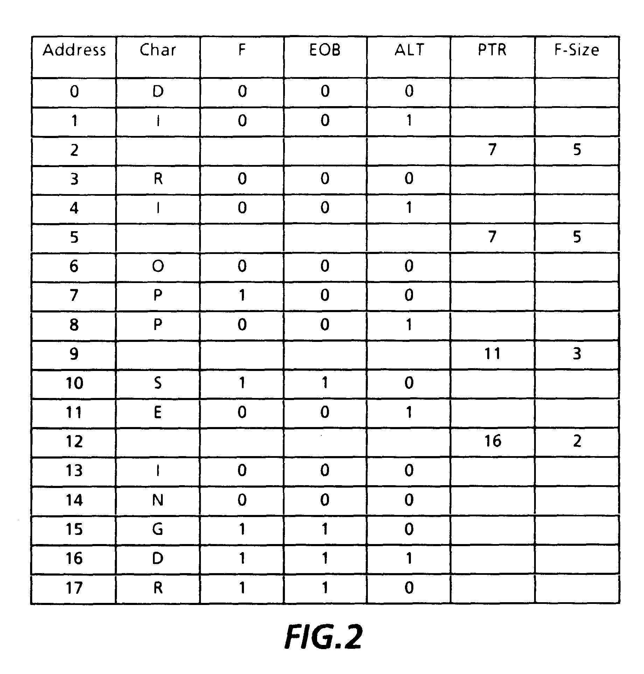

The general features of a mapping technique can be understood from Figs. 1 and 2. Fig. 1 is a state-transition representation of a word list that includes fifteen words--dip, dips, dipped, dipper, dipping, drip, drips, dripped, dripper, dripping, drop, drops, dropped, dropper and dropping. Fig. 2, on the other hand, shows word list data indicating the words in the word list of Fig. 1.

Fig. 1 shows a state-transition representation of a word list. Each transition in Fig. 1 is labeled with an associated character, and the state after the final character of an acceptable word is marked with an "F", indicating a valid final character. If the characters of one of the acceptable words are applied in sequence, beginning at start state 10, they will lead to one of the states marked "F" along a sequence of transitions and states. The word "dip", for example, leads to state 16. Therefore, the word list represented in Fig. 1 can be used to determine whether an input word is one of the acceptable words, and could be used for spelling checking and similar applications.

Fig. 1 represents the acceptable words as beginning at the left and ending at the right. For purposes of this description, the term "prefix" means any combination of characters at the beginning of an acceptable word, and is represented in Fig. 1 by the sequence of transitions and states leading from start state 10 to any of the states. Start state 10 thus represents the end of a prefix with no elements, while state 16 represents the end of the prefixes "dip", "drip" and "drop". Similarly, the term "suffix" means any combination of characters at the end of an acceptable string, and is represented in Fig. 1 by the sequence of transitions and states leading from one of the states to any state that is marked "F". An end of branch state thus represents the beginning of a suffix with no elements, while start state 10 represents the beginning of a set of suffixes that includes all the acceptable words.

It follows that each state in Fig. 1 represents the end of at least one prefix and the beginning of at least one suffix. In addition, each of the states marked "F" represents at least one suffix ending, because, as noted above, it is a state immediately after the final character of an acceptable word. State 16, for example, represents the suffix ending for the words "dip", "drip" and "drop".

For purposes of the following description, the terms "suffix" and "prefix" are not limited to suffixes and prefixes attached to a root, but have the general meaning set forth above. Therefore, these terms would be equally applicable to a list of words in which each word's elements are in reverse order, so that suffixes of each word end with the word's first element and prefixes begin with the word's last element.

Fig. 1 illustrates several features of a word list representation that can be efficiently stored and used. The representation in Fig. 1 is acyclic, because none of the transitions out of a given state lead back to that state, either directly or through some combination of other transitions. This is significant because it ensures a finite number of acceptable words. If a word list were infinite, it could be made suitable by somehow ensuring a finite number of acceptable words, such as by limiting the number of cycles that could be made within a single scan of the word list representation.

In addition, the word list representation in Fig. 1 is convergent, both on the left and on the right, meaning that both prefixes and suffixes may be common to a number of acceptable words. This is significant because the techniques described below make use of both convergences in reducing the size of data indicating a word list and, at the same time, provide for the mapping of the words in such a list to a dense set of unique numbers. For example, common suffixes are represented respectively in Fig. 1 by multiple incoming transitions to a state. The suffixes "-ps" and "-s" are common suffixes of the words dips, drips and drops. Fig. 1 also represents the collapse of each of these common suffixes into a shared branch, so that "-s", for example, occurs in only one branch rather than occurring once for each acceptable word which ends with that suffix.

A word list representation such as in Fig. 1 can be used for mapping. For example, a number could be associated with the last character of each acceptable word so that when that character is matched, the number is available. This would preclude, however, collapsing a common suffix into a shared branch as shown in Fig. 1, since each suffix would include a unique number and would therefore be different than every other suffix. In addition, N/W mapping would be slow because the word list data would first be searched to find the number being mapped, after which the corresponding word would be determined by finding the string leading to that number.

Rapid W/N and N/W mapping does not preclude collapsing common suffixes. A word can be mapped to a number by counting the number of suffix endings passed during the search for that word. For example, for the word list representation in Fig. 1, the number of the word "dip" would be zero, while the number of the word "drops" would be fourteen. N/W mapping, on the other hand, can begin with the number and decrement it for each suffix ending passed in scanning through the word list data. When the number reaches zero, the scan has reached the suffix ending of the word, and that word can be provided based on characters stored during the scan.

If it is necessary to count each suffix ending individually, every branch of the word list data must be scanned, both for W/N and N/W mapping. The two transitions which originate in state 12 illustrate this problem. The first transition, labeled "I", leads to a large branch while the second transition, labeled "R" leads to a different large branch. Therefore, if a search compares the word "drops" with the word list representation in Fig. 1, and if the search must go through the entire branch depending from the first transition from state 12 in order to count the suffix endings in that branch, the search will be relatively slow. The same is true for each of states 14, 16 and 18. State 16, for example, has a first transition, labeled "P", which leads to a large branch, while its second transition, labeled "S", together with the state to which it leads, form a very small branch.

The necessary information for skipping a branch and the number of suffix endings in the branch can be included in the word list data to make the branch skippable. Rather than counting the suffix endings in a branch, the number of suffix endings can then simply be added to or subtracted from the running count. This information may be included in the word list data by associating it with data which is a branch point from which a scan either goes to the skippable branch or goes to another branch. The skippable branch is referred to herein as the next branch of the branch point, while the other branch is referred to as the alternative branch of the branch point. In general, while searching the word list data, if a character from the word being searched matches a character in a branch point, the search proceeds to the next branch, but if not, the search proceeds to the alternative branch. Data which is not a branch point may nonetheless have a next branch, in which case the search proceeds to the next branch in case of a match but ends in case of a mismatch.

Fig. 2 shows stored word list data implementing the above features for the word list represented in Fig. 1. In Fig. 2, the data stored at each address ordinarily represents one of the transitions shown in Fig. 1. These units of data are therefore referred to as transition units, and each transition unit in Fig. 2 includes character data (CHAR) indicating a character corresponding to the transition; final data (F) indicating whether the transition is a suffix ending, meaning the transition enters a final state and thus represents the last character of an acceptable word; end of branch data (EOB) indicating whether the transition unit has a next branch; and alternative data (ALT) indicating whether the branch which begins with the transition unit has an alternative branch. The CHAR, F, EOB and ALT data may all be encoded into a single byte for each transition unit, or the EOB data may be encoded in a second byte with a special EOB value that follows the first byte only if the transition unit does not have a next branch.

The PTR column in Fig. 2 contains pointers which are stored in association with four branch points of the list, each branch point being a transition unit which has both a next branch and an alternative branch. The pointer at address 2 is associated with the transition unit corresponding to the transition from state 12 labeled "I", while the pointer at address 5 is associated with the transition from state 14 labeled "I". The pointer at address 9 is associated with the transition from state 16 labeled "P", and the pointer at address 12 is associated with the transition from state 18 labeled "E". Each pointer indicates the address at which the next branch begins, so that if the next branch is skipped, the pointer is similarly skipped, but if the next branch is not skipped, the pointer is taken. Thus the pointers shown in Fig. 2 permit branch skipping and serve to indicate both the location of the next branch and the location of the alternative branch. An equivalent list could similarly be created in which each pointer, rather than indicating the next branch, would indicate the alternative branch.

Additional data is included in the word list data about the number of suffix endings in a skippable branch, to permit branch skipping during mapping. The data in the F-size column in Fig. 2, stored in association with each branch point having a skippable next branch, indicates the number of suffix endings within the next branch. Therefore, a count of suffix endings can be maintained even when the next branch is skipped, using the F-size of the next branch. Referring back to Fig. 1, the word "drops", for example, can be rapidly mapped to a number without going through the next branches of the transitions labeled "I", "I" and "P" from states 12, 14 and 16, respectively.

The association of a pointer and F-size with each branch point having a skippable next branch in Fig. 2 thus serves a number of functions. The pointer indicates the location of the next branch. The positioning of the pointer further indicates the location of the alternative branch, because the pointer and F-size are immediately before that location. Therefore, a scan of the word list data that reaches the branch point can continue with the next branch or can alternatively skip it and continue with the alternative branch. The F-size indicates the number of suffix endings in the next branch, so that a count of suffix endings can be maintained even when the next branch is skipped. Thus this technique is unusual in that it provides both greater speed and more compact storage--greater speed because it permits branch skipping and more compact storage because it permits the collapse of a common suffix into a shared branch.

This technique is applicable to a data structure, such as a directed graph, in which word list data can be stored so that it has suffix endings in branches of the data structure. In general, the word list data can be stored in a data structure which includes, for each data unit, information indicating the locations of the next branch and the alternative branch, if any; information indicating whether the data unit is an acceptable suffix ending; and, if the data unit is a branch point having a skippable next branch, information indicating the number of acceptable suffix endings within the next branch. In contrast with Lucchesi et al., cited above, this technique does not require that a count be included with the data representing every transition. Counts of suffix endings need only be included where they can be used in branch skipping, because counts of suffix endings can be instead obtained by scanning a branch.

We turn now to techniques for creating and storing compact word list data as in Fig. 2.

### B. Word List Creation

Two important factors in producing a product that includes word list data as in Fig. 2 are the determination of the F-sizes and the assignment of the pointers. After covering a technique for determining F-sizes, we will cover in some detail a system for using that technique and a number of other techniques to assign pointers and produce a product that includes word list data as in Fig. 2.

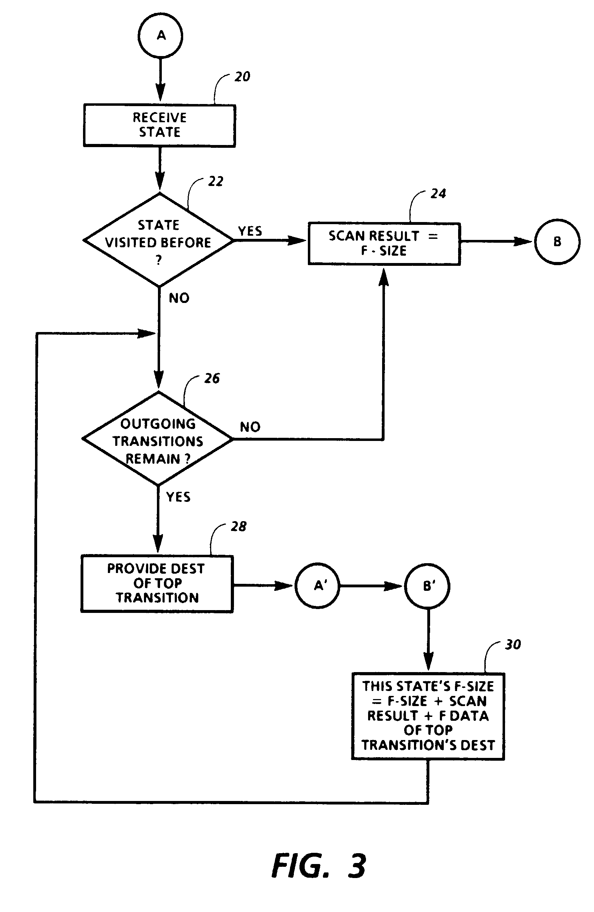

1. F-Size Calculation. Fig. 3 illustrates a recursive routine which may be used to obtain the number of suffix endings within each skippable branch. The routine of Fig. 3 relates specifically to the encoding of an FSM data structure.

The routine of Fig. 3 begins in box 20 by receiving a state from which a branch of the FSM data structure may depend. The first call of the routine will provide the start state of the FSM data structure, but subsequent recursive calls of the routine of Fig. 3 will provide other states within the FSM data structure. As a result, the routine of Fig. 3 performs a scan through the entire FSM data structure, after which the data unit for each state includes information indicating the F-size, the F-size being the number of acceptable words which have endings within the branch depending from that state. Therefore, the F-size of all the states is initialized to zero before the routine of Fig. 3 is executed. As it goes through the states, it calculates the F-size of each state and also changes a flag within each state to indicate that state has been visited.

The routine of Fig. 3 continues by testing whether the received state has been previously visited in this scan, in box 22. If so, the routine returns a scan result in box 24 to the routine which called it, indicated at B. The scan result is the F-size of the received state, as calculated on the previous visit.

If, on the other hand, the test in box 22 determines that the state has not been previously visited, then the test in box 26 determines whether the state has any remaining outgoing transitions which have not been examined during the current scan. If not, scan result is returned in box 24, as above. But if so, the state which is the destination of the top remaining transition is provided in box 28 to a recursive call of the routine of Fig. 3 at A', which results in a call beginning at A. When that call returns its scan result at B, that result is received by the calling routine at B', and the calling routine proceeds in box 30 to update the F-size of its state by adding the scan result to the previous value of its F-size and also adding the F data of the destination state of the top transition, which will be one if that state is a suffix ending and which will be zero otherwise. The routine then returns to the test of box 26 to determine whether outgoing transitions from its state remain to be scanned.

The order in which the transitions of each state are scanned by the routine of Fig. 3 will depend on the order in which they are arranged within each state's data unit. In order to store the words so that their corresponding numbers correspond to their alphabetical order, the transitions may be arranged in alphabetical order. In order to obtain a compact encoded FSM data structure, however, the transitions may be sorted, for example, according to the number of incoming transitions to each transition's destination state or according to the frequency of occurrence of the character in that transition, with the first transition from each state having the least frequent character. These or other sorting techniques may assist in eliminating redundancy. Techniques for eliminating redundancy by minimization of an FSM data structure can also be used.

Although calculation of F-size makes it possible to associate information with a branch indicating the number of suffix endings it contains, a number of other processes are necessary in order to produce a product that includes a compact word list of the type shown in Fig. 2.

2. Word List System. Fig. 4 shows data processing system 100 which can be used to produce a product that includes a stored word list. CPU 102 receives the FSM data structure to be encoded through FSM input buffer 104 and, when encoding is completed, provides an output file through buffer 106. During encoding, it executes software stored in program memory 110, including a main encoding routine 112; state unit information collecting subroutines 114, including the routine described above in relation to Fig. 3; a pointer size and index assigning subroutine 116; a transition unit generating and locating subroutine 118; a file writing subroutine 120; and a byte value assigning subroutine 122. During the execution of this software, CPU 102 stores data in and retrieves data from working data memory 130, within which each state's data unit SU and the information about that state's outgoing transitions TU are stored together with a number of tables.

In general, the subroutines shown in Fig. 4 can be implemented as described in European Patent Application No. 93305651.7, filed July 19, 1993, referred to herein as "the encoding application." As described in the encoding application, information is collected about each state, including a count of pointers entering the state, referred to as InPointers, and a cost for the state, indicating the amount of memory required to store the part of the data structure that depends from the state. In addition, a list, referred to as Root List, includes blocks of transition units that are always accessed using pointers.

State unit information collecting subroutines 114 includes a routine that may test first whether the first outgoing transition from the state is a special non-final transition, referred to herein as an "epsilon" or "empty-string" transition; if so, rather than incrementing InPointers for the present state, it is incremented for the destination of the epsilon transition. Such transistions can sometimes be used to increase the amount of shared data. This routine may make a test and leave this state's cost unchanged if a non-final epsilon transition is detected. In addition, the routine may compare the result with the maximum state cost. If the result exceeds the maximum cost and if this is not the last transition of the present state, the destination is pushed directly onto the root list, the destination's cost is set to the cost of a short pointer and the destination's InPointers is incremented. In addition, this routine may store, the first time a state is visited, an indication in the state that the branch depending from it will be stored inline rather than by a pointer even if that branch is a shared branch.

3. Pointer Assignment and Other Subroutines. A number of techniques are particularly useful in relation to pointer size and index assignment.

a. Overall Pointer Assignment Subroutine. Pointer size and index assignment can generally follow the techniques described in the encoding application, with a few differences.

The subroutine that assigns pointer sizes and indices also includes information in the word list data so that a branch may be skipped; the information may include pointers if advantageous. As noted below, one difference is that the subroutine also takes into account the F-size, which is stored in association with each pointer and which therefore affects the pointer assignment decision.

In sorting the states prior to assigning pointers, the subroutine can position states with higher InPointers before states with lower InPointers. States with equal InPointers can be sorted by F-size, with smaller F-sizes preceding larger ones.

In storing the word list data, the appropriate F-size is stored in relation to each three byte pointer so that the F-size can be retrieved if the branch pointed to is skipped. Each one or two byte pointer index, on the other hand, can be used to access a lookup table containing the appropriate three byte pointer and F-size, so that the F-size need not be stored in relation to each occurrence of a one or two byte pointer index.

If the F-size for a three byte pointer is stored immediately after the pointer, each three byte pointer together with its F-size occupies more than three bytes. For example, each three byte pointer with F-size may be four bytes long if the F-size is a single byte; similarly, each three byte pointer with F-size may be six bytes long if the F-size is two bytes and an additional byte of all zeroes is inserted before the F-size to indicate the two byte F-size; and so forth if greater F-sizes are needed. It would be possible to use four and five byte lengths, omitting the additional byte of all zeroes, but this would require that the length be decoded from the byte value of the first byte each time a three byte pointer is encountered; two byte F-sizes are so rare in relation to one byte F-sizes that the simplicity gained by avoiding this decoding outweighs the space cost of using a six byte length rather than a five byte length. In the following discussion, four byte, six byte, and longer pointer/F-size combinations are all treated as long pointers, in contrast to the one and two byte pointer indexes, which are treated as short pointers.

The subroutine that creates transition units and assigns locations can take into account the F-size of each state. When a byte location is assigned to a pointer, the F-size may be annexed, whether the byte location is to be included in the encoded data structure or in the appropriate pointer table.

In the subroutine that writes the file, start state tables can be written to include the F-sizes at which to begin counting when entering the word list data at a given transition. The F-size at which to begin will be one less than the number corresponding to the first word in the word list data that begins with the character corresponding to that transition. In addition, the F-size can be taken into account by including the annexed F-size in any pointer written in the pointer tables or in the data structure.

b. Short Pointer Assignment. The overall pointer assignment subroutine can call a subroutine that perform short pointer assignment. Short pointer assignment can also take F-size into account.

In determining whether a short pointer is advantageous, the subroutine can determine whether a state has a pointer size of two and only two InPointers. In this case, if the state's F-size is greater than 255, increasing the F-size field associated with a pointer index from one byte wide to two bytes for values greater than 255 adds an unnecessary byte for each of the other table entries, which would be disadvantageous. Therefore, it is appropriate to stop assigning short pointers at the state. Sorting the states guarantees that all later states also have F-size greater than 255, so that no more short pointers are used.

If the current pointer index size would be beneficial, and if the current state's F-size is no greater than 255 so that it will fit in a single byte in the lookup table, the current pointer index size and the next index of that size can be assigned. Another subroutine can be called to determine whether the current pointer size would be beneficial, taking into account the F-size. This subroutine can estimate the cost of a given state before the costs of all states depending from it have been precisely determined. It can ensure that a pointer will only be assigned when it is beneficial, by providing the cost of the branch which would depend from that pointer.

Yet another subroutine can be called to determine whether it would be beneficial to change the last one byte pointer index to a two byte pointer index in order to have an additional 255 two byte pointer indexes. This subroutine can also call the subroutine that determines whether the current pointer size would be beneficial,to obtain a result indicating the cost of the branch depending from a state.

If the cost of the branch is two or less, there would be no benefit in assigning a two byte pointer index. Otherwise, the calling subroutine determines whether the state's F-size is greater than 255, in which case each incoming pointer would be a three byte pointer rather than a two byte pointer index.

If the F-size is 255 or less, the length of the table entry required for an additional two byte pointer index is subtracted from the product of two times the number of two byte pointer indexes, which will be equal to InPointers, and this difference is added to a variable Benefit that keeps track of the total benefit of the two byte pointer index. But if the F-size exceeds 255, the entry length is subtracted from the product of four times InPointers, and this difference is added to Benefit. The factor of two which is multiplied with InPointers is the benefit of changing a three byte pointer with a one byte F-size to a two byte pointer index. The factor of four is the benefit of changing a three byte pointer with a byte of all zeroes and a two byte F-size to a two byte pointer index.

In either case, when Benefit has been increased appropriately, its value is used to determine whether a change should be made in pointer assignment.

c. Long Pointer Assignment. The overall pointer assignment subroutine can also call a subroutine that performs long pointer assignment. Long pointer assignment can also take F-size into account.

The long pointer assignment subroutine can, if a state has InPointers, determine whether the state's F-size exceeds 255. If so, a six byte long pointer with F-size attached is necessary.

Another subroutine can be called to adjust the pointer sizes of some states.

If a state will have a long pointer assigned to it, this subroutine can determine whether its F-size exceeds 255. If so, it is assigned a six byte pointer, but if not it is assigned a four byte pointer.

### C. W/N Mapping

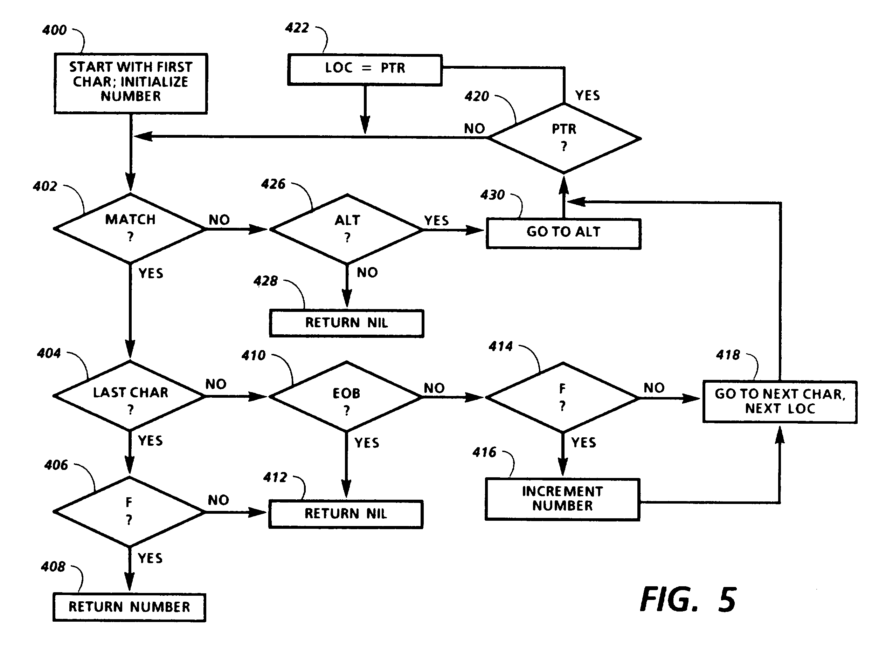

Word-to-number (W/N) mapping can be performed in a number of ways. W/N mapping, like N/W mapping, can use a stored word list such as a directed graph that includes branches that can be skipped during mapping. Fig. 5 shows a W/N mapping routine that is suitable for use with a word list stored as described above.

In Fig. 5, W/N mapping begins in box 400 with the first character of the word being mapped and with a variable Number initialized. Number will eventually take the value of the number to which the word is mapped. For the simple word list of Fig. 2, it would be feasible to start with the first location of the word list data and with Number equal to zero, but for a typical large data structure the first character of the word will be used to access a first character table to find the starting location of that character within the word list data and to find a number one less than the number of the first accepted word beginning with that character, to which Number is initialized. Then the process of matching the word being mapped begins with the test in box 402. The tests performed on each byte can be based on the manner in which the transition units were encoded into bytes when producing the word list data, in each case relying on the encoded byte to indicate the CHAR, F, EOB and ALT data of its transition unit.

If the current character of the word matches the CHAR data of the current transition unit, a further test in box 404 determines whether this is the last character of the word being mapped. If so and if the test in box 406 determines that the F data of the current transition unit is set, then Number is returned in box 408 and mapping is complete. But if the F data is not set, or if the current character is not the last character but the test in box 410 determines that the current transition unit's EOB data is set, then the word is not in the word list, and nil is returned in box 412. Otherwise, the test in box 414 determines whether the current transition unit's F data is set and, if so, Number is incremented in box 416. Then the routine proceeds to the next character in the word and the next location in the word list data in box 418. If the test in box 420 determines that the next location contains a pointer or pointer index, however, the routine proceeds in box 422 to the location indicated by the pointer at that location or by the pointer retrieved from the appropriate pointer table using the pointer index. Because the pointer is followed rather than skipped, the F-size is not taken into account in this case.

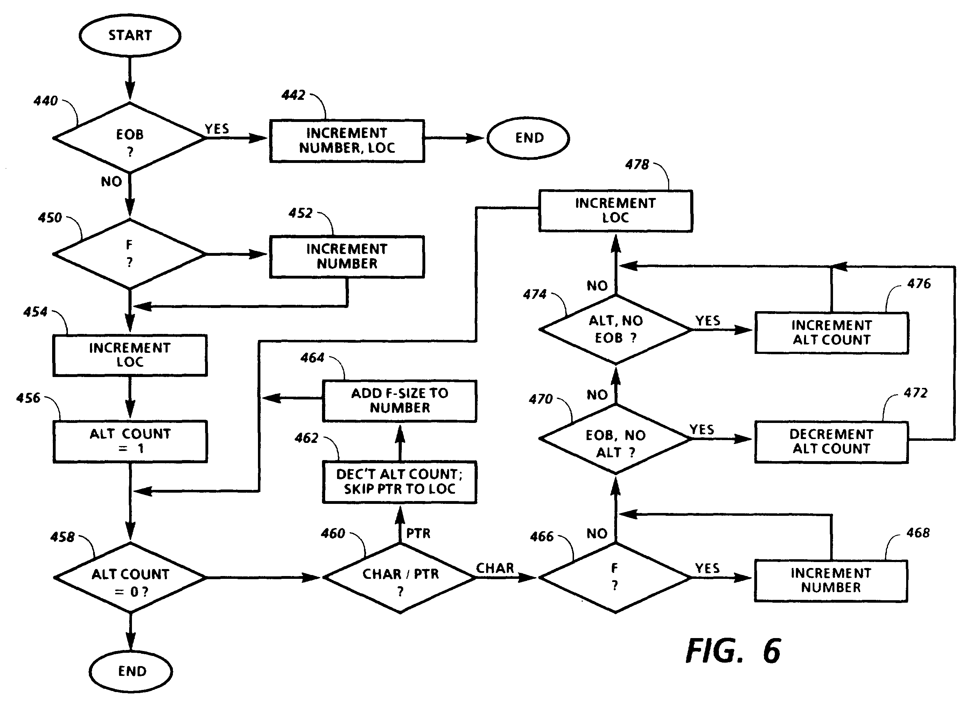

If, on the other hand, the test in box 402 determines that the current character does not match the current transition unit's CHAR data, it is still possible that the word is in the word list if the current transition unit's ALT data is set. If the test in box 426 determines that this is the case, the GoToAlt subroutine in Fig. 6 is performed, as shown in box 428. But if not, nil is returned in box 430 because the word cannot be in the word list.

In Fig. 6, GoToAlt begins in box 440 by determining whether the current transition unit's EOB data is set (in which case the F data must also be set, since every state of the word list data which is an end of branch must also be final). If so, the next location in the data structure either contains the alternative or a pointer to the alternative, so Number is incremented and the location is incremented in box 442. Then GoToAlt ends, returning to the routine of Fig. 5 where the alternative is found through the test in box 420.

If, on the other hand, the test in box 440 determines that EOB is not set, the current transition unit's F data is tested in box 450, and Number is incremented in box 452 if the F data is set. Then GoToAlt increments the location in box 454 and initializes a variable AltCount to one (1) in box 456. Until AltCount reaches zero (0), as determined by the test in box 458, GoToAlt proceeds through the locations in the manner described below. But when AltCount reaches zero, GoToAlt ends returning to the routine of Fig. 5, where the alternative is found through the test in box 420.

As it proceeds through the locations, GoToAlt tests in box 460 whether the byte at the current location is an encoded transition unit on the one hand, so that it contains CHAR data, or is a pointer or pointer index on the other. If a pointer or pointer index, AltCount is decremented and the pointer or pointer index is skipped over in box 462. The length of the pointer or pointer index to be skipped over can be determined from the value at that location, except that the length of long pointers, whether four or six, is determined from the value following the three address bytes as described above. Also, in box 464, the F-size of the skipped branch is added to Number. The F-size is retrieved either directly from a position annexed to the pointer or from the appropriate lookup table. When the F-size has been added, GoToAlt returns to test whether AltCount has reached zero in box 458.

If, on the other hand, the test in box 460 indicates that the byte at the current location is a transition unit, so that it contains CHAR data, GoToAlt tests in box 466 whether the current transition unit's F data is set and, if so, increments Number in box 468. Similarly, GoToAlt tests in box 470 whether the EOB data is set and the ALT data is cleared and, if so, decrements AltCount in box 472. Then, GoToAlt tests in box 474 whether the ALT data is set and the EOB data is cleared and, if so, increments AltCount in box 476. After adjusting Number and AltCount in this manner, GoToAlt increments the location in box 478 before returning to the test in box 458, as above.

The routine of Figs. 5 and 6 thus performs W/N mapping because it maps every word in a word list to a unique number. An additional test may be added at the beginning of the routine of Fig. 5 for testing whether the word list data accepts a null string when a null string is received. The first accepted word, whether the null string or not, will be mapped to zero, and the last accepted word will be mapped to the integer one less than the number of acceptable words.

Characters may be specially coded using escape codes. If this is done, a number of additional steps are taken within the routine of Fig. 5. After receiving each character of a word, whether in box 400 or in box 418, it is necessary to check the escape code data of the character to determine the number of escape codes which will be found in the word list data before the character byte. Then, whenever a match occurs in box 402 it is necessary to check whether all of the expected escape codes have been received. If the current transition unit's EOB data is not set and if all of the escape codes before the character byte have been received, the next match in box 402 will compare the next transition unit's CHAR data with the character code field of the character being matched. But if the EOB data is not set and more escape codes are expected, the number of remaining escape codes is decremented before proceeding. In this way, the escape codes in the stored word list are decoded while generally following the routine of Fig. 5.

The conversion of a word to a number thus involves scanning through a stored word list while keeping a count of the number of transition units with set F data, each indicating a suffix ending. When the word is matched, this count is the number of the word. The key advantage over simple sequential search of the list is that whole branches can be skipped in one quick operation.

The above-described technique has the following advantages over the technique of Lucchesi et al., described above: The above-described technique can be used with the byte-encoding techniques of the encoding application to obtain very compact word list data. The above-described technique does not require storage of data indicating a count for every state, as in the technique of Lucchesi et al. Instead, the above-described technique only stores a count with a pointer, and pointers are only included to provide a benefit in space or time or both, so that, for many states, no additional data indicating a count is stored. Therefore, the additional data necessary to store data indicating counts is approximately 2-5% for the above-described technique, while approximately 35% of additional data is necessary for the technique of Lucchesi et al. because each transition occupies the same amount of space.

### D. N/W Mapping

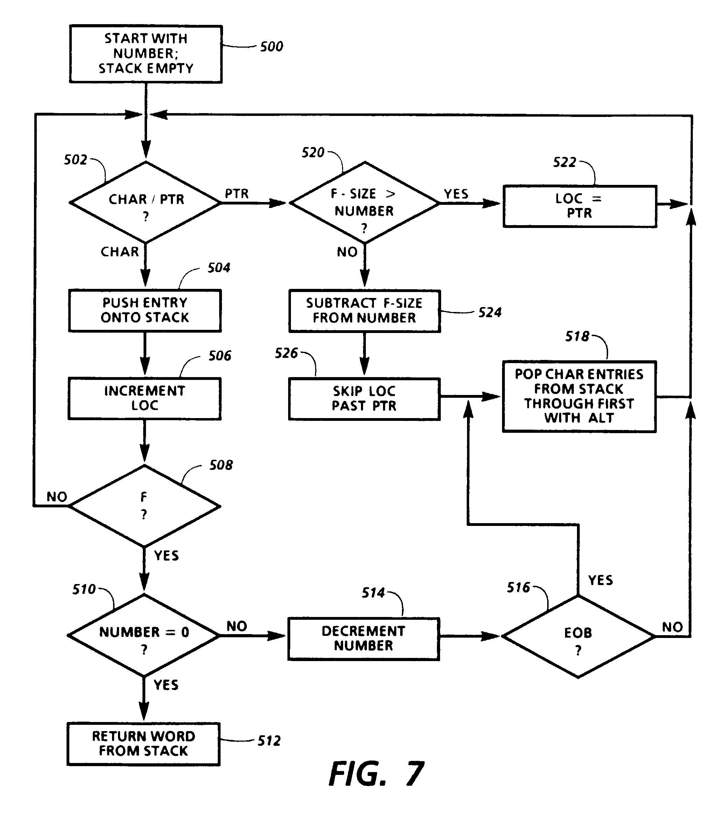

N/W mapping may also be performed in a number of ways, provided that N/W mapping reverses W/N mapping. Fig. 7 shows a routine for N/W mapping which is appropriate for a word list stored as described above and for the W/N mapping techniques described above. In general, the routine of Fig. 7 scans through a stored word list, decrementing the number to be matched for each byte with set F data. The number reaches zero at the end of the word corresponding to the number being mapped, and that word is then returned.

In Fig. 7, N/W mapping begins in box 500 with a variable Number and an empty stack. This stack is managed by the routine of Fig. 7 so that it contains the word corresponding to the number being mapped when the routine ends. Therefore, all that is necessary to return the corresponding word is to unload and provide the contents of the stack.

In a simple word list like that of Fig. 2, it would be feasible to start at the first entry, with Number being the full number being mapped. In a larger word list, however, the number being mapped can be used to directly determine which is the first character of the word based on the first character table, which includes the number corresponding to the word immediately preceding the first word beginning with each character. The number being mapped can be compared with these first character numbers to find the largest one which is less than it, and the difference between the number being mapped and that first character number is the starting value of Number. The current location is then set to the first character transition of the character corresponding to that first character number. But if the number being mapped turned out to be greater than the number corresponding to the last word in the word list data, nil is returned. Also, if the number being mapped is zero, the word list data is initially tested to determine whether it accepts the null string, and if so the null string is returned. Ordinarily, however, the routine will proceed to the remainder of the routine shown in Fig. 7.

The test in box 502 determines whether the byte at the current location is a transition unit, i.e. has CHAR data, or is a pointer or pointer index. If it is a transition unit, the byte is pushed onto the stack, in box 504, and the location is incremented to proceed to the next location in the FSM. If the test in box 508 determines that the transition unit's F data is set, the test in box 510 determines whether Number is equal to zero. When Number reaches zero, the word in the stack is provided in box 512 and mapping is completed. But if Number is not yet zero, Number is decremented in box 514. The test in box 516 then determines whether the transition unit's EOB data is set. If so, the character entries in the LIFO stack are deleted beginning with the most recently loaded until an entry with its ALT data set is reached, in box 518, because the word being sought does not have its ending in this branch. Then the routine returns to the test in box 502 for the byte at the next location.

If, on the other hand, the byte at the current location is a pointer or a pointer index, the test in box 520 compares the F-size of the branch to which that pointer or pointer index leads with Number. The F-size is either retrieved from its position relative to the pointer or, if the current location has a pointer index, from the lookup table entry corresponding to that index. If the F-size is greater than Number, the location is set in box 522 to the location indicated by the pointer or by the pointer retrieved using the pointer index, because the word sought ends within the branch of the word list data which depends from the pointer. The byte at that location is then processed beginning with the test in box 502.

If the F-size is less than or equal to number, it is subtracted from Number in box 524, The routine proceeds in box 526 to the next location after the pointer or pointer index. In addition, the step in box 518 is performed as described above, to pop entries from the stack until one which has its ALT data set is reached. Then the routine returns to the test in box 502.

In returning the word from the stack in box 512, it is necessary to decode the encoded transition units to obtain the corresponding characters. If escape codes were used to encode the characters in the word list data, as described above, decoding includes testing for escape codes. When an escape code is found, the number of consecutive escape codes is counted until a code which is not an escape code is found. The number of escape codes together with that code are then used in the character code table to find the output code for the appropriate character, such as an ASCII code.

Thus N/W mapping, like W/N mapping, is able to skip over branches of the word list data while maintaining a count of word ends. Because an F-size is associated with each branch point with a skippable next branch, that F-size can be used to maintain the count. Also associated with each such branch point is the necessary information to skip over the next branch, and this information may be stored in the word list data by encoding each pointer or pointer index so as to indicate its length and by positioning the alternative branch immediately after the pointer (with F-size annexed) or pointer index which leads to the skippable branch. As a result, the search can proceeed rapidly through the word list data when mapping is in progress.

### E. Applications

The mapping techniques described above are useful in diverse applications, some of which are shown in Figs. 8-10.

Fig. 8 shows the functions of associating information with a word using W/N mapping. In box 540, words are input, and each word is mapped in box 542. In box 544, each number is associated with corresponding information which is then output in box 546. One example of such an application would be a dictionary, with the technique of Fig. 8 being used to retrieve the definition of an input word.

Fig. 9 shows a variation of Fig. 8 in which the information associated with each number is one or more numbers corresponding to other words. Words are input in box 550 and mapped to numbers in box 552. Then, in box 554, each number is associated with other numbers which bear some relation to it. Those numbers are mapped back to words in box 556, and the resulting words are output in box 558. This technique may be used for obtaining related words such as synonyms and antonyms, such as in a thesaurus. A translation capability could be provided, with the user typing in a word in one of a number of languages and the device responding with a number of groups of words, each including that word and synonymous words of other languages.

Fig. 10 illustrates how mapping could be used in text compression. A series of words to be compressed is received in box 560, and each word is mapped to a number in box 562. Then, the series of numbers is compressed using appropriate compression techniques which eliminate additional redundancy. The compressed data is then transmitted or stored in box 566, after which it is decompressed to a series of numbers, in box 568. These numbers are mapped to words in box 570, and the series of words is output in box 572 just as it was received.

### F. Miscellaneous

A number of modifications may be advantageous under certain circumstances. In the encoding of the word list discussed above, the word list is encoded in the form of transition units, and those transition units which have a next branch and an alternative branch are branch points. If a state in the word list data has a large number of outgoing transitions, it might be advantageous to associate the branching and suffix ending information with that state's corresponding branch point in the form of a table. Each entry of the table would correspond to one of the outgoing transitions, indicating the location of the branch depending from that transition and indicating an F-size. This F-size would not be the number of suffix endings in that branch but would be the F-size of all the branches which would be effectively skipped over if that branch were taken. During W/N mapping, the branch would be taken if that outgoing transition's character matched the next character of a word being searched. During N/W mapping, the branch would be taken if the associated F-size was the table's largest F-size smaller than the remaining number. The table entries could be ordered based on the characters of the outgoing transitions or in any other appropriate way.

As noted above, another variation would be to modify the branching information stored at a branch point. For example, a pointer could be stored to the alternative branch rather than to the next branch. This pointer could be a relative pointer such as the length of the next branch.

Another variation would be to modify the manner in which the suffix ending information is associated with the branch point. Rather than being annexed to the pointer to the next branch, the suffix ending number could be stored at the beginning of the next branch. If the next branch had three byte pointers to it, this would save one byte for each three byte pointer, though a greater saving of space might result from changing to two byte pointer indexes.

## Claims

1. A product comprising:
a storage medium for storing data in machine-accessible form; and
word list data stored by the storage medium; the word list data indicating a list of words; the word list data comprising:
a plurality of suffix data items indicating suffix endings of words in the list such that the word list data can be used to perform mapping between each word in the list and a respective number; the suffix data items including a first suffix data item indicating a first set of suffix endings that cannot be skipped during mapping and a second suffix data item indicating a second set of suffix endings that can be skipped during mapping; the first suffix data item being accessible during mapping to obtain a count of suffix endings in the first set; the second suffix data item being accessible during mapping to obtain a count of suffix endings in the second set; and
a first branching data item; the first branching data item including:
branch taking information that can be used to perform mapping in relation to a word that ends with one of the suffix endings in the second set; the branch taking information indicating a location of the second suffix data item; and
branch skipping information that can be used to perform mapping in relation to a word that does not end with one of the suffix endings in the first set; the branch skipping information indicating a number of suffix endings in the second set;
the number of suffix endings in the first suffix data item only being obtainable by accessing the first suffix data item.

2. A product as claimed in claim 1, in which the second suffix data item indicates suffix endings of first and second sublists of the list of words; the first and second sublists being different; the first branching data item being reached in using the word list data to map between the words in the first sublist and their numbers; the word list data further comprising a second branching data item that is reached in using the word list data to map between the words in the second sublist and their numbers; the second branching data item including:
branch taking information that can be used to perform mapping in relation to a word that ends with one of the suffix endings in the second set; the branch taking information indicating a location of the second suffix data item; and
branch skipping information that can be used to perform mapping in relation to a word that does not end with one of the suffix endings in the second set; the branch skipping information indicating a number of suffix endings in the second set.

3. A product as claimed in claim 1 or claim 2, in which the branching data item further includes label information indicating at least one of a set of character types; the suffix data items further including a third suffix data item indicating a third set of suffix endings; the word list data comprising a sequence of data items including the branching data item, the second suffix data item, and the third suffix data item; the branch taking information further indicating whether the branching data item has a next data item in the sequence to which mapping can continue if a current character in the word matches the label information, the next data item being the second suffix data item; the branch skipping information further indicating whether the branching data item has an alternative data item in the sequence to which mapping can continue if a current character in the word does not match the label information, the alternative data item being the third suffix data item.

4. A product as claimed in claim 3, in which the third suffix data item immediately follows the branching data item in the sequence.

5. A product as claimed in any one of the preceding claims, in which the branch taking information includes pointer data and the branch skipping information includes number data; the number data being annexed to the pointer data.

6. A product as claimed in any one of the preceding claims, in which the word list data further comprise a table with an entry that includes the branch taking information and the branch skipping information; the branching data item including an index to the entry in the table.

7. A method of mapping a word to a number using word list data; the word list data indicating a list of words that includes the word; the word list data including:
a plurality of suffix data items indicating suffix endings of words in the list; the suffix data items including a first suffix data item indicating a first set of suffix endings that cannot be skipped during mapping and a second suffix data item indicating a second set of suffix endings that can be skipped during mapping; the first suffix data item being accessible during mapping to obtain a count of suffix endings in the first set; the second suffix data item being accessible during mapping to obtain a count of suffix endings in the second set; and
a branching data item; the branching data item including:
branch taking information indicating a location of the second suffix data item; and
branch skipping information indicating a number of suffix endings in the second set;
the number of suffix endings in the first suffix data item only being obtainable by accessing the first suffix data item;
the method comprising:
accessing the first suffix data item and using the first suffix data item to update a running count of suffix endings based on the number of suffix endings in the first suffix data item;
accessing the branching data item;
if a word being mapped has a suffix ending in the second set of suffix endings, using the branch taking information to access the second suffix data item; and
if the word being mapped does not have a suffix ending in the second set of suffix endings, using the branch skipping information to update the running count of suffix endings.

8. A method as claimed in claim 7, in which the act of using the branch skipping information comprises adding the number of suffix endings in the second set to the count of suffix endings.

9. A method as claimed in claim 8, in which the suffix data items further include a third suffix data item indicating a third set of suffix endings; the third suffix data item including a sequence of bytes, the bytes including, for each suffix ending in the third set, a suffix ending byte indicating the suffix ending; the method further comprising, if the word being mapped has a suffix ending that is not in the second set of suffix endings:
accessing the third suffix data item;
scanning the sequence of bytes, incrementing the count of suffix endings for each suffix ending byte, until reaching a suffix ending byte indicating a suffix ending of the word being mapped; and
providing the count of suffix endings as a number for the word being mapped.

10. A method as claimed in any one of claims 7 to 9, in which the branching data item further includes label information indicating a character that precedes each suffix ending in the second set of suffix endings; the method further comprising:
comparing a character from the word being mapped with the label information to determine whether the word being mapped has a suffix ending in the second set of suffix endings.

11. A method of mapping a number to a word using word list data; the word list data indicating a list of words that includes the word; the word list data including:
a plurality of suffix data items indicating suffix endings of words in the list; the suffix data items including a first suffix data item indicating a first set of suffix endings that cannot be skipped during mapping and a second suffix data item indicating a second set of suffix endings that can be skipped during mapping; the first suffix data item being accessible during mapping to obtain a count of suffix endings in the first set; the second suffix data item being accessible during mapping to obtain a count of suffix endings in the second set; and
a branching data item; the branching data item including:
branch taking information indicating a location of the second suffix data item; and
branch skipping information indicating a number of suffix endings in the second set;
the number of suffix endings in the first suffix data item only being obtainable by accessing the first suffix data item;
the method comprising:
accessing the first suffix data item and using the first suffix data item to update a running count of suffix endings based on the number of suffix endings in the first suffix data item;
accessing the branching data item;
if a number being mapped has a word with a suffix ending in the second set of suffix endings, using the branch taking information to access the second suffix data item; and
if the number being mapped has a word with a suffix ending that is not in the second set of suffix endings, using the branch skipping information to update the running count of suffix endings.

12. A method as claimed in claim 11, in which the act of using the branch skipping information comprises subtracting the number of suffix endings in the second set from the count of suffix endings; the count of suffix endings starting as the number being mapped.

13. A method as claimed in claim 12, in which the suffix data items further include a third suffix data item indicating a third set of suffix endings; the third suffix data item includes a sequence of bytes; the bytes including, for each suffix ending in the third set, a suffix ending byte indicating the suffix ending; the bytes further including label bytes, each label byte indicating a character in a suffix ending in the third set; the method further comprising, if the number being mapped has a word with a suffix ending that is not in the second set of suffix endings:
accessing the third suffix data item;
scanning the sequence of bytes, updating a stack to store characters indicating a current prefix for each label byte and decrementing the count of suffix endings for each suffix ending byte, until the count of suffix endings reaches zero; and
providing the current prefix from the stack as a word for the number being mapped.

14. A method as claimed in any one of claims 11 to 13, further comprising:
comparing the count of suffix endings with the number of suffix endings in the second set to determine whether the number being mapped has a word with a suffix ending in the second set of suffix endings.

## Patentansprüche

1. Erzeugnis, das umfaβt:
ein Speichermedium zum Speichern von Daten in maschinenzugänglicher Form und
durch das Speichermedium gespeicherte Wortlistendaten, wobei die Wortlistendaten eine Liste von Wörtern bezeichnen, wobei die Wortlistendaten umfassen:
eine Mehrzahl von Suffixdatenitems, die Suffixendungen von Wörtern in der Liste so bezeichnen, daβ die Wortlistendaten verwendet werden können, eine Umwandlung zwischen jedem Wort in der Liste und einer betreffenden Zahl durchzuführen, wobei die Suffixdatenitems ein erstes Suffixdatenitem umfassen, das einen ersten Satz von Suffixendungen bezeichnet, die während der Umwandlung nicht übersprungen werden können, sowie ein zweites Suffixdatenitem, das einen zweiten Satz von Suffixendungen bezeichnet, die während der Umwandlung übersprungen werden können, wobei das erste Suffixdatenitem während der Umwandlung zugänglich ist, um eine Zählung von Suffixendungen in dem ersten Satz zu erlangen, wobei das zweite Suffixdatenitem während der Umwandlung zugänglich ist, um eine Zählung von Suffixendungen in dem zweiten Satz zu erlangen, und
ein erstes Verzweigungsdatenitem, wobei das erste Verzweigungsdatenitem umfaßt:
Verzweigungsnahmeinformation, die verwendet werden kann, um eine Umwandlung in bezug auf ein Wort durchzuführen, das mit einer der Suffixendungen in dem zweiten Satz endet, wobei die Verzweigungsnahmeinformation eine Stelle des zweiten Suffixdatenitems bezeichnet, und
Verzweigungsauslassungsinformation, die verwendet werden kann, um eine Umwandlung in bezug auf ein Wort durchzuführen, das nicht mit einer der Suffixendungen in dem ersten Satz endet, wobei die Verzweigungsauslassungsinformation eine Anzahl von Suffixendungen in dem zweiten Satz bezeichnet,
wobei die Anzahl von Suffixendungen in dem ersten Suffixdatenitem nur durch Zugreifen auf das erste Suffixdatenitem erlangbar ist.

2. Erzeugnis nach Anspruch 1, bei dem das zweite Suffixdatenitem Suffixendungen einer ersten und zweiten Unterliste der Liste von Wörtern bezeichnet, die erste und zweite Unterliste verschieden sind, das erste Verzweigungsdatenitem beim Verwenden der Wortlistendaten erreicht wird, um zwischen den Wörtern in der ersten Unterliste und ihren Zahlen umzuwandeln, wobei die Wortlistendaten weiter ein zweites Verzweigungsdatenitem umfassen, das beim Verwenden der Wortlistendaten erreicht wird, um zwischen den Wörtern in der zweiten Unterliste und ihren Zahlen umzuwandeln, wobei das zweite Verzweigungsdatenitem umfaßt:
Verzweigungsnahmeinformation, die verwendet werden kann, um eine Umwandlung in bezug auf ein Wort durchzuführen, das mit einer der Suffixendungen in dem zweiten Satz endet, wobei die Verzweigungsnahmeinformation eine Stelle des zweiten Suffixdatenitems bezeichnet, und
Verzweigungsauslassungsinformation, die verwendet werden kann, um eine Umwandlung in bezug auf ein Wort durchzuführen, das nicht mit einer der Suffixendungen in dem zweiten Satz endet, wobei die Verzweigungsauslassungsinformation eine Anzahl von Suffixendungen in dem zweiten Satz bezeichnet.

3. Erzeugnis nach Anspruch 1 oder 2, bei dem das Verzweigungsdatenitem weiter Markierungsinformation umfaßt, die wenigstens einen eines Satzes von Zeichentypen bezeichnet, wobei die Suffixdatenitems weiter ein drittes Suffixdatenitem umfassen, das einen dritten Satz Suffixendungen bezeichnet, die Wortlistendaten eine Folge von Datenitems umfassen, die das Verzweigungsdatenitem, das zweite Suffixdatenitem und das dritte Suffixdatenitem einschließt, die Verzweigungsnahmeinformation weiter angibt, ob das Verzweigungsdatenitem ein nächstes Datenitem in der Folge besitzt, bei dem die Umwandlung weitergehen kann, wenn ein momentanes Zeichen in dem Wort mit der Markierungsinformation übereinstimmt, wobei das nächste Datenitem das zweite Suffixdatenitem ist, wobei die Verzweigungsauslassungsinformation weiter angibt, ob das Verzweigungsdatenitem ein alternatives Datenitem in der Folge besitzt, bei dem die Umwandlung weitergehen kann, wenn ein momentanes Zeichen in dem Wort mit der Markierungsinformation nicht übereinstimmt, wobei das alternative Datenitem das dritte Suffixdatenitem ist.

4. Erzeugnis nach Anspruch 3, bei dem das dritte Suffixdatenitem in der Folge unmittelbar dem Verzweigungsdatenitem folgt.

5. Erzeugnis nach einem der vorangehenden Ansprüche, bei dem die Verzweigungsnahmeinformation Zeigerdaten umfaßt und die Verzweigungsauslassungsinformation Nummerndaten umfaßt, wobei die Nummerndaten an die Zeigerdaten angehängt sind.

6. Erzeugnis nach einem der vorangehenden Ansprüche, bei dem die Wortlistendaten weiter eine Tabelle mit einem Eintrag umfassen, der die Verzweigungsnahmeinformation und die Verzweigungsauslassungsinformation enthält, wobei das Verzweigungsdatenitem einen Index zu dem Eintrag in der Tabelle enthält.

7. Verfahren zum Umwandeln eines Wortes in eine Zahl unter Verwendung von Wortlistendaten, wobei die Wortlistendaten eine Liste von Wörtern bezeichnen, die das Wort enthält, wobei die Wortlistendaten umfassen:
eine Mehrzahl von Suffixdatenitems, die Suffixendungen von Wörtern in der Liste bezeichnen, wobei die Suffixdatenitems ein erstes Suffixdatenitem umfassen, das einen ersten Satz von Suffixendungen bezeichnet, die während der Umwandlung nicht übersprungen werden können, sowie ein zweites Suffixdatenitem, das einen zweiten Satz von Suffixendungen bezeichnet, die während der Umwandlung übersprungen werden können, wobei das erste Suffixdatenitem während der Umwandlung zugänglich ist, um eine Zählung von Suffixendungen in dem ersten Satz zu erlangen, wobei das zweite Suffixdatenitem während der Umwandlung zugänglich ist, um eine Zählung von Suffixendungen in dem zweiten Satz zu erlangen, und
ein Verzweigungsdatenitem, wobei das Verzweigungsdatenitem umfaßt:
Verzweigungsnahmeinformation, die eine Stelle des zweiten Suffixdatenitems bezeichnet, und
Verzweigungsauslassungsinformation, die eine Anzahl von Suffixendungen in dem zweiten Satz bezeichnet,
wobei die Anzahl von Suffixendungen in dem ersten Suffixdatenitem nur durch Zugreifen auf das erste Suffixdatenitem erlangbar ist,
wobei das Verfahren umfaßt:
Zugreifen auf das erste Suffixdatenitem und Verwenden des ersten Suffixdatenitems, um eine laufende Zählung von Suffixendungen basierend auf der Anzahl von Suffixendungen in dem ersten Suffixdatenitem zu aktualisieren;
Zugreifen auf das Verzweigungsdatenitem;
wenn ein Wort, das umgewandelt wird, eine Suffixendung in dem zweiten Satz von Suffixendungen hat, Verwenden der Verzweigungsnahmeinformation, um auf das zweite Suffixdatenitem zuzugreifen, und
wenn das Wort, das umgewandelt wird, keine Suffixendung in dem zweiten Satz von Suffixendungen hat, Verwenden der Verzweigungsauslassungsinformation, um die laufende Zählung von Suffixendungen zu aktualisieren.

8. Verfahren nach Anspruch 7, bei dem der Schritt des Verwendens der Verzweigungsauslassungsinformation das Addieren der Anzahl von Suffixendungen in dem zweiten Satz zu der Zählung von Suffixendungen umfaßt.

9. Verfahren nach Anspruch 8, bei dem die Suffixdatenitems weiter ein drittes Suffixdatenitem umfassen, das einen dritten Satz von Suffixendungen bezeichnet, wobei das dritte Suffixdatenitem eine Folge von Bytes umfaßt, wobei die Bytes für jede Suffixendung in dem dritten Satz ein Suffixendungsbyte umfassen, das die Suffixendung bezeichnet, wobei das Verfahren weiter umfaßt, wenn das Wort, das umgewandelt wird, eine Suffixendung hat, die nicht in dem zweiten Satz von Suffixendungen ist:
Zugreifen auf das dritte Suffixdatenitem;
Abtasten der Folge von Bytes, Inkrementieren der Zählung von Suffixendungen für jedes Suffixendungsbyte, bis ein Suffixendungsbyte erreicht wird, das eine Suffixendung des Wortes, das umgewandelt wird, bezeichnet, und
Bereitstellen der Zählung von Suffixendungen als eine Zahl für das Wort, das umgewandelt wird.

10. Verfahren nach einem der Ansprüche 7 bis 9, bei dem das Verzweigungsdatenitem weiter Markierungsinformation umfaßt, die ein Zeichen bezeichnet, das jeder Suffixendung in dem zweiten Satz von Suffixendungen vorangeht, wobei das Verfahren weiter umfaßt:
Vergleichen eines Zeichens von dem Wort, das umgewandelt wird, mit der Markierungsinformation, um festzustellen, ob das Wort, das umgewandelt wird, eine Suffixendung in dem zweiten Satz von Suffixendungen hat.

11. Verfahren zum Umwandeln einer Zahl in ein Wort unter Verwendung von Wortlistendaten, wobei die Wortlistendaten eine Liste von Wörtern bezeichnen, die das Wort enthält, wobei die Wortlistendaten umfassen: eine Mehrzahl von Suffixdatenitems, die Suffixendungen von Wörtern in der Liste bezeichnen, wobei die Suffixdatenitems ein erstes Suffixdatenitem umfassen, das einen ersten Satz von Suffixendungen bezeichnet, die während der Umwandlung nicht übersprungen werden können, sowie ein zweites Suffixdatenitem, das einen zweiten Satz von Suffixendungen bezeichnet, die während der Umwandlung übersprungen werden können, wobei das erste Suffixdatenitem während der Umwandlung zugänglich ist, um eine Zählung von Suffixendungen in dem ersten Satz zu erlangen, wobei das zweite Suffixdatenitem während der Umwandlung zugänglich ist, um eine Zählung von Suffixendungen in dem zweiten Satz zu erlangen, und
ein Verzweigungsdatenitem, wobei das Verzweigungsdatenitem umfaßt:
Verzweigungsnahmeinformation, die eine Stelle des zweiten Suffixdatenitems bezeichnet, und
Verzweigungsauslassungsinformation, die eine Anzahl von Suffixendungen in dem zweiten Satz bezeichnet,
wobei die Anzahl von Suffixendungen in dem ersten Suffixdatenitem nur durch Zugreifen auf das erste Suffixdatenitem erlangbar ist,
wobei das Verfahren umfaßt:
Zugreifen auf das erste Suffixdatenitem und Verwenden des ersten Suffixdatenitems, um eine laufende Zählung von Suffixendungen basierend auf der Anzahl von Suffixendungen in dem ersten Suffixdatenitem zu aktualisieren;
Zugreifen auf das Verzweigungsdatenitem;
wenn eine Zahl, die umgewandelt wird, ein Wort mit einer Suffixendung in dem zweiten Satz von Suffixendungen hat, Verwenden der Verzweigungsnahmeinformation, um auf das zweite Suffixdatenitem zuzugreifen, und
wenn die Zahl, die umgewandelt wird, ein Wort mit einer Suffixendung hat, die nicht in dem zweiten Satz von Suffixendungen ist, Verwenden der Verzweigungsauslassungsinformation, um die laufende Zählung von Suffixendungen zu aktualisieren.

12. Verfahren nach Anspruch 11, bei dem der Schritt des Verwendens der Verzweigungsauslassungsinformation das Subtrahieren der Anzahl von Suffixendungen in dem zweiten Satz von der Zählung von Suffixendungen umfaβt, wobei die Zählung von Suffixendungen als die Zahl, die umgewandelt wird, beginnt.

13. Verfahren nach Anspruch 12, bei dem die Suffixdatenitems weiter ein drittes Suffixdatenitem umfassen, das einen dritten Satz von Suffixendungen bezeichnet, wobei das dritte Suffixdatenitem eine Folge von Bytes umfaßt, wobei die Bytes für jede Suffixendung in dem dritten Satz ein Suffixendungsbyte umfassen, das die Suffixendung bezeichnet, wobei die Bytes weiter Markierungsbytes umfassen, wobei jedes Markierungsbyte ein Zeichen in einer Suffixendung in dem dritten Satz bezeichnet, wobei das Verfahren weiter umfaßt, wenn die Zahl, die umgewandelt wird, ein Wort mit einer Suffixendung hat, die nicht in dem zweiten Satz von Suffixendungen ist:
Zugreifen auf das dritte Suffixdatenitem;
Abtasten der Folge von Bytes, Aktualisieren eines Stapels, um Zeichen zu speichern, die ein momentanes Präfix für jedes Markierungsbyte bezeichnen, und Dekrementieren der Zählung von Suffixendungen für jedes Suffixendungsbyte, bis die Zählung von Suffixendungen null erreicht und
Bereitstellen des momentanen Präfixes von dem Stapel als ein Wort für die Zahl, die umgewandelt wird.

14. Verfahren nach einem der Ansprüche 11 bis 13, weiter umfassend:
Vergleichen der Zählung von Suffixendungen mit der Anzahl von Suffixendungen in dem zweiten Satz, um festzustellen, ob die Zahl, die umgewandelt wird, ein Wort mit einer Suffixendung in dem zweiten Satz von Suffixendungen hat.

## Revendications

1. Produit comprenant :
un support de mémorisation pour mémoriser des données sous forme accessible par la machine ; et
des données de liste de mots mémorisées par le support de mémorisation ; les données de liste de mots indiquant une liste de mots ; les données de liste de mots comprenant :
une pluralité de données élémentaires de suffixe indiquant des terminaisons de suffixe des mots dans la liste d'une manière telle que les données de liste de mots peuvent être utilisées pour effectuer la mise en correspondance entre chaque mot dans la liste et un nombre respectif ; les données élémentaires de suffixe incluant des premières données élémentaires de suffixe indiquant un premier ensemble de terminaisons de suffixe qui ne peut pas être sauté pendant la mise en correspondance et des secondes données élémentaires de suffixe indiquant un second ensemble de terminaisons de suffixe qui peut être sauté pendant la mise en correspondance ; les premières données élémentaires de suffixe étant accessibles pendant la mise en correspondance afin d'obtenir un compte de terminaisons de suffixe dans le premier ensemble ; les secondes données élémentaires de suffixe étant accessibles pendant la mise en correspondance afin d'obtenir un compte de terminaisons de suffixe dans le second ensemble ; et
des premières données élémentaires de branchement ; les premières données élémentaires de branchement comprenant :
des informations d'exécution de branche qui peuvent être utilisées pour effectuer la mise en correspondance en relation avec un mot qui se termine avec une des terminaisons de suffixe dans le second ensemble ; les informations d'exécution de branche indiquant un emplacement des secondes données élémentaires de suffixe ; et
des informations de saut de branche qui peuvent être utilisées pour effectuer la mise en correspondance en relation avec un mot qui ne se termine pas avec une des terminaisons de suffixe dans le premier ensemble ; les informations de saut de branche indiquant un nombre de terminaisons de suffixe dans le second ensemble ;
le nombre de terminaisons de suffixe dans les premières données élémentaires de suffixe étant seulement obtenable en accédant aux premières données élémentaires de suffixe.

2. Produit selon la revendication 1, dans lequel les secondes données élémentaires de suffixe indiquent les terminaisons de suffixe des première et seconde sous-listes de la liste de mots ; les première et seconde sous-listes étant différentes ; les premières données élémentaires de branchement étant atteintes en utilisant les données d'une liste de mots afin d'établir la correspondance entre les mots dans la première sous-liste et leurs nombres ; les données de liste de mots comprenant de plus des secondes données élémentaires de branchement qui sont atteintes en utilisant les données de liste de mots afin d'établir la correspondance entre les mots dans la seconde sous-liste et leurs nombres ; les secondes données élémentaires de branchement comprenant :
des informations d'exécution de branche qui doivent être utilisées pour effectuer la mise en correspondance en relation avec un mot qui se termine avec une des terminaisons de suffixe dans le second ensemble ; les informations d'exécution de branche indiquant un emplacement des secondes données élémentaires de suffixe ; et
des informations de saut de branche qui doivent être utilisées pour effectuer la mise en correspondance en relation avec un mot qui ne se termine pas avec une des terminaisons de suffixe dans le second ensemble ; les informations de saut de branche indiquant un nombre de terminaisons de suffixe dans le second ensemble.

3. Produit selon la revendication 1 ou la revendication 2, dans lequel les données élémentaires de branchement comprennent de plus des informations d'étiquette indiquant au moins un d'un ensemble de types de caractères ; les données élémentaires de suffixe comprenant de plus des troisièmes données élémentaires de suffixe indiquant un troisième ensemble de terminaisons de suffixe ; les données de liste de mots comprenant une séquence de données élémentaires incluant les données élémentaires de branchement, les secondes données élémentaires de suffixe et les troisièmes données élémentaires de suffixe ; les informations d'exécution de branche indiquant de plus si les données élémentaires de branchement comportent des données élémentaires suivantes dans la séquence dans laquelle la mise en correspondance peut se poursuivre si un caractère courant dans le mot concorde avec les informations d'étiquette, les données élémentaires suivantes étant les secondes données élémentaires de suffixe ; les informations de saut de branche indiquant de plus si les données élémentaires de branchement comportent d'autres données élémentaires dans la séquence dans laquelle la mise en correspondance peut se poursuivre si un caractère courant dans le mot ne concorde pas avec les informations d'étiquette, les autres données élémentaires étant les troisièmes données élémentaires de suffixe.

4. Produit selon la revendication 3, dans lequel les troisièmes données élémentaires de suffixe suivent immédiatement les données élémentaires de branchement dans la séquence.

5. Produit selon l'une quelconque des revendications précédentes, dans lequel les informations d'exécution de branche comprennent des données de pointeur et les informations de saut de branche comprennent des données de nombre ; les données de nombre étant annexées aux données de pointeur.

6. Produit selon l'une quelconque des revendications précédentes, dans lequel les données de liste de mots comprennent de plus une table avec une entrée qui comprend les informations d'exécution de branche et les informations de saut de branche ; l'élément de données de branchement incluant un index à l'entrée dans la table.

7. Procédé de mise en correspondance d'un mot avec un nombre en utilisant des données de liste de mots ; les données de liste de mots indiquant une liste de mots qui comprend le mot ; les données de liste de mots comprenant :
une pluralité de données élémentaires de suffixe indiquant des terminaisons de suffixe des mots dans la liste ; les données élémentaires de suffixe incluant des premières données élémentaires de suffixe indiquant un premier ensemble de terminaisons de suffixe qui ne peut pas être sauté pendant la mise en correspondance et des secondes données élémentaires de suffixe indiquant un second ensemble de terminaisons de suffixe qui peut être sauté pendant la mise en correspondance ; les premières données élémentaires de suffixe étant accessibles pendant la mise en correspondance afin d'obtenir un compte de terminaisons de suffixe dans le premier ensemble ; les secondes données élémentaires de suffixe étant accessibles pendant la mise en correspondance afin d'obtenir un compte de terminaisons de suffixe dans le second ensemble ; et
des données élémentaires de branchement, les données élémentaires de branchement comprenant :
des informations d'exécution de branche indiquant un emplacement des secondes données élémentaires de suffixe ; et
des informations de saut de branche indiquant un nombre de terminaisons de suffixe dans le second ensemble ;
le nombre de terminaisons de suffixe dans les premières données élémentaires de suffixe étant seulement obtenable en accédant aux premières données élémentaires de suffixe ;
le procédé comprenant les étapes consistant à :
accéder aux premières données élémentaires de suffixe et utiliser les premières données élémentaires de suffixe afin de mettre à jour un compte courant des terminaisons de suffixe basé sur le nombre des terminaisons de suffixe dans les premières données élémentaires de suffixe ;
accéder aux données élémentaires de branchement ;
si un mot qui a été mis en correspondance a une terminaison de suffixe dans le second ensemble de terminaisons de suffixe, utiliser les informations d'exécution de branche afin d'accéder aux secondes données élémentaires de suffixe ; et
si le mot qui a été mis en correspondance ne comporte pas de terminaison de suffixe dans le second ensemble de terminaisons de suffixe, utiliser les informations de saut de branche afin de mettre à jour le compte courant des terminaisons de suffixe.

8. Procédé selon la revendication 7, dans lequel l'action d'utiliser les informations de saut de branche comprend l'ajout du nombre de terminaisons de suffixe dans le second ensemble au compte de terminaisons de suffixe.

9. Procédé selon la revendication 8, dans lequel les données élémentaires de suffixe comprennent de plus des troisièmes données élémentaires de suffixe indiquant un troisième ensemble de terminaisons de suffixe ; les troisièmes données élémentaires de suffixe incluant une séquence d'octets, les octets incluant, pour chaque terminaison de suffixe dans le troisième ensemble, un octet de terminaison de suffixe indiquant la terminaison de suffixe ; le procédé comprenant de plus, si le mot qui a été mis en correspondance comporte une terminaison de suffixe qui n'est pas dans le second ensemble de terminaisons de suffixe ;
accéder aux troisièmes données élémentaires de suffixe ;
scruter la séquence des octets, incrémenter le compte des terminaisons de suffixe pour chaque octet de terminaison de suffixe, jusqu'à atteindre un octet de terminaison de suffixe indiquant une terminaison de suffixe du mot qui est mis en correspondance ; et
délivrer le compte des terminaisons de suffixe comme un nombre pour le mot qui est mis en correspondance.

10. Procédé selon l'une quelconque des revendications 7 à 9, dans lequel les données élémentaires de branchement comprennent de plus des informations d'étiquette indiquant un caractère qui précède chaque terminaison de suffixe dans le second ensemble de terminaisons de suffixe ; le procédé comprenant de plus l'étape consistant à :
comparer un caractère à partir du mot qui est mis en correspondance avec les informations d'étiquette afin de déterminer si le mot qui est mis en correspondance comporte une terminaison de suffixe dans le second ensemble des terminaisons de suffixe.

11. Procédé de mise en correspondance d'un nombre avec un mot en utilisant des données de liste de mots ; les données de liste de mots indiquant une liste de mots qui comprend le mot ; les données de liste de mots comprenant :
une pluralité de données élémentaires de suffixe indiquant des terminaisons de suffixe des mots dans la liste ; les données élémentaires de suffixe incluant des premières données élémentaires de suffixe indiquant un premier ensemble de terminaisons de suffixe qui ne peut pas être sauté pendant la mise en correspondance et des secondes données élémentaires de suffixe indiquant un second ensemble de terminaisons de suffixe qui peut être sauté pendant la mise en correspondance ; les premières données élémentaires de suffixe étant accessibles pendant la mise en correspondance afin d'obtenir un compte de terminaisons de suffixe dans le premier ensemble ; les secondes données élémentaires de suffixe étant accessibles pendant la mise en correspondance afin d'obtenir un compte de terminaisons de suffixe dans le second ensemble ; et
des données élémentaires de branchement ; les données élémentaires de branchement comprenant :
des informations d'exécution de branche indiquant un emplacement des secondes données élémentaires de suffixe ; et
des informations de saut de branche indiquant un nombre de terminaisons de suffixe dans le second ensemble ;
le nombre de terminaisons de suffixe dans les premières données élémentaires de suffixe étant seulement obtenable en accédant aux premières données élémentaires de suffixe ;
le procédé comprenant les étapes consistant à :
accéder aux premières données élémentaires de suffixe et utiliser les premières données élémentaires de suffixe afin de mettre à jour un compte courant des terminaisons de suffixe basé sur le nombre des terminaisons de suffixe dans les premières données élémentaires de suffixe ;
accéder aux données élémentaires de branchement ;
si un nombre qui doit être mis en correspondance comporte un mot avec une terminaison de suffixe dans le second ensemble de terminaisons de suffixe, utiliser les informations d'exécution de branche afin d'accéder aux secondes données élémentaires de suffixe ; et
si le nombre qui doit être mis en correspondance comporte un mot avec une terminaison de suffixe qui n'est pas dans le second ensemble de terminaisons de suffixe, utiliser les informations de saut de branche afin de mettre à jour le compte courant des terminaisons de suffixe.

12. Procédé selon la revendication 11, dans lequel l'action d'utiliser les informations de saut de branche comprend la soustraction du nombre des terminaisons de suffixe dans le second ensemble du compte des terminaisons de suffixe ; le compte des terminaisons de suffixe commençant lorsque le nombre est mis en correspondance.

13. Procédé selon la revendication 12, dans lequel les données élémentaires de suffixe comprennent de plus des troisièmes données élémentaires de suffixe indiquant un troisième ensemble de terminaisons de suffixe ; les troisièmes données élémentaires de suffixe comprennent une séquence d'octets ; les octets comprenant, pour chaque terminaison de suffixe dans le troisième ensemble, un octet de terminaison de suffixe indiquant la terminaison de suffixe ; les octets comprenant de plus des octets d'étiquette, chaque octet d'étiquette indiquant un caractère dans une terminaison de suffixe dans le troisième ensemble ; le procédé comprenant de plus les étapes consistant à, si le nombre qui doit être mis en correspondance comporte un mot avec une terminaison de suffixe qui n'est pas dans le second ensemble de terminaisons de suffixe :
accéder aux troisièmes données élémentaires de suffixe ;
scruter la séquence des octets, mettre à jour une pile afin de mémoriser les caractères indiquant un préfixe courant pour chaque octet d'étiquette et décrémenter le compte des terminaisons de suffixe pour chaque octet de terminaison de suffixe jusqu'à ce que le compte des terminaisons de suffixe atteigne zéro ; et
délivrer le préfixe courant à partir de la pile comme un mot pour le nombre qui est mis en correspondance.

14. Procédé selon l'une quelconque des revendications 1 à 13, comprenant de plus l'étape consistant à :
comparer le compte des terminaisons de suffixe avec le nombre des terminaisons de suffixe dans le second ensemble afin de déterminer si le nombre qui doit être mis en correspondance comporte un mot avec une terminaison de suffixe dans le second ensemble des terminaisons de suffixe.
